Europäisches Patentamt

European Patent Office

Office européen des brevets

(19)

(11) Veröffentlichungsnummer: **0 054 186**
**B1**

(12) **EUROPÄISCHE PATENTSCHRIFT**

(45) Veröffentlichungstag der Patentschrift: **27.05.87**

(21) Anmeldenummer: **81109675.9**

(22) Anmeldetag: **13.11.81**

(51) Int. Cl.⁴: **B 29 B 7/30,** B 01 F 7/08

(54) **Vorrichtung zum Mischen, Dispergieren und Homogenisieren von Massen mit mindestens einer viskosen Komponente.**

(30) Priorität: **16.12.80 DE 3047314**

(43) Veröffentlichungstag der Anmeldung:
**23.06.82 Patentblatt 82/25**

(45) Bekanntmachung des Hinweises auf die
Patenterteilung:
**27.05.87 Patentblatt 87/22**

(84) Benannte Vertragsstaaten:
**DE GB**

(56) Entgegenhaltungen:
**CH-A- 453 666**
**CH-A- 521 782**
**DE-A-2 802 125**
**DE-C- 940 109**
**DE-C-1 255 098**
**FR-A-1 386 417**
**GB-A-2 048 092**
**US-A-1 592 231**
**US-A-3 387 826**
**US-A-4 105 637**

(73) Patentinhaber: **Blach, Josef A.**
**Wilhelmstrasse 24**
**D-7144 Asperg (DE)**

(72) Erfinder: **Blach, Josef A.**
**Wilhelmstrasse 24**
**D-7144 Asperg (DE)**

(74) Vertreter: **Hoeger, Stellrecht & Partner**
**Uhlandstrasse 14c**
**D-7000 Stuttgart 1 (DE)**

Courier Press, Leamington Spa, England.

## Beschreibung

Die Erfindung betrifft eine Vorrichtung zum Mischen, Dispergieren und Homogenisieren von Massen mit mindestens einer viskosen Komponente, welche in einem Gehäuse mindestens zwei zueinander parallele, gleichsinnig antreibbare, miteinander kämmende Wellen besitzt, für die das Gehäuse einander durchdringende, zueinander parallele, kreiszylindrische oder konische Gehäusehohlräume aufweist und die zur Bearbeitung der Massen im axialen Abstand voneinander angeordnete, einander gegenüberstehende Ringscheibenabschnitte mit von einem zur Wellenachse konzentrischen Kreis abweichender Kontur tragen, wobei sich die von der zugehörigen Wellenachse den grössten Abstand aufweisenden Umfangsbereiche der Ringscheibenabschnitte der beiden Wellen, in axialer Richtung gesehen, überlappen.

Bei einer bekannten Vorrichtung dieser Art (DE—A—28 02 125) tragen zwei Wellen als Ringscheibenabschnitte in geringem axialem Abstand voneinander angeordnete Exzenterscheiben von überall gleicher Dicke, die wesentlich grösser, und zwar mehr als doppelt so gross, als der axiale Abstand der Exzenterscheiben voneinander ist. Die Exzenterscheiben der einen Welle stehen denjenigen der anderen Welle gegenüber, und zwischen den Exzenterscheiben ist jeweils eine zur jeweiligen Wellenachse konzentrische Kreisringscheibe angeordnet, wobei jeweils zwei einander gegenüberstehende Kreisringscheiben der beiden Wellen unterschiedliche Durchmesser aufweisen: Die eine Kreisringscheibe eines solchen Paares besitzt einen Durchmesser, welcher nur geringfügig kleiner als der Durchmesser des zugeordneten Gehäusehohlraums an der betreffenden Stelle ist, während der Durchmesser der anderen Kreisringscheibe dieses Paares wesentlich kleiner ist—ihr Radius its gleich dem Achsabstand der beiden Wellen, vermindert um den Radius der grösseren Kreisringscheibe. Die beiden Kreisringscheiben eines Paares sollen dazu dienen, an den Stellen der Kreisringscheibenpaare denjenigen Gehäusehohlraum in axialer Richtung abzudichten, der die grössere Kreisringscheibe aufnimmt; der Gehäusehohlraum erlaubt an dieser Stelle also keine Materialverschiebung in Längsrichtung der von ihm aufgenommenen Welle.

Wie sich der DE—C—940 109 entnehmen lässt, führen bei Vorrichtungen der eingangs erwähnten Art verhältnismässig dicke Ringscheibenabschnitte, die, wie es beim Stand der Technik generell der Fall ist, mit ganz geringem axialem Abstand voneinander auf den Wellen angeordnet sind, zu eine Beanspruchung der zur bearbeitenden Massen durch hohe Druckkräfte und zu hohen Druckunterschieden in den zu bearbeitenden Massen, wodurch bei nur geringem Mischeffekt hohe Temperaturen in den zu bearbeitenden Massen entstehen. Dies hat zur Folge, daß sich die bekannten Vorrichtungen der eingangs erwähnten Art nur mit verhältnismässig geringen Wellendrehzahlen betreiben lassen, infolgedessen für das Mischen, Dispergieren und/oder Homogenisieren beträchtliche Zeiten erforderlich sind und, auch wegen der sich in den Massen aufbauenden hohen Drücke, viel Antriebsenergie benötigt wird. Diese Nachteile der bekannten Vorrichtungen der eingangs erwähnten Art gelten wegen der die Gehäusehohlräume in axialer Richtung abdichtenden grösseren Kreisringscheiben der DE—A—28 02 125 für diese bekannte Konstruktion in noch stärkeren Mass als für die Vorrichtung nach der DE—C—940 109, weil die grösseren Kreisringscheiben eine Ausweichen des in dem mittleren Zwickel zwischen zwei einander gegenüberstehenden Exzenterscheiben verdichteten Materials in axialer Richtung verhindern.

Auch bei einem bekannten Zweiwellen-Polymerisationsreaktor (US—PS 4 105 637), dessen Wellen mit einander gegenüberstehenden Ringscheibenabschnitten von ungefähr elliptischer Gestalt bestückt sind, beträgt der axiale Abstand der von der zugehörigen Wellenachse den grössten Abstand aufweisenden Umfangsbereiche der Ringscheibenabschnitte voneinander nur einen Bruchteil der Dicke dieser Umfangsbereiche der Ringscheibenabschnitte, wobei als Abstandshalter an die Ringscheibenabschnitte einseitig jeweils eine Art kurzer Nabe angeformt ist.

Der Erfindung lag die Aufgabe zugrunde, eine Wellenmaschine zum Mischen, Dispergieren und Homogenisieren von Massen zu entwickeln, in der die letzteren überwiegend einer Scherbeanspruchung unterzogen und gleichzeitig die auf die Massen wirkenden Druckkräfte und Druckunterschiede auf ein Minimum reduziert werden. Ausgehend von einer Vorrichtung der eingangs erwähnten Art lässt sich diese Aufgabe erfindungsgemäss dadurch lösen, daß die Diche der Ringscheibenabschnitte kleiner ist als 10% des Durchmessers des zugeordneten Gehäusehohlraums an der betreffenden Stelle und daß der axiale Abstand der Ringscheibenabschnitte voneinander um ein Vielfaches grösser als ihre Dicke ist. Während also der gesamte Stand der Technik lehrt, die Diche derjenigen Bereiche der Ringscheibenabschnitte, die im wesentlichen der Bearbeitung der Massen dienen, nämlich der von der zugehörigen Wellenachse den grössten Abstand aufweisenden Umfangsbereiche der Ringscheibenabschnitte, wesentlich grösser zu wählen als den axialen Abstand dieser Umfangsbereiche voneinander, um die zu bearbeitenden Massen vor den breiten Kämmen der Ringscheibenabschnitte herzuschieben, sie hohen Druckgradienten auszusetzen und die Stirnflächen der Ringscheibenabschnitte der miteinander kämmenden Wellen sich gegenseitig abstreifen zu lassen, was möglichst kleine axiale Abstände auch der in radialer Richtung äusseren Umfangsbereiche der Ringscheibenabschnitte voneinander zur Voraussetzung hat, lehrt die vorliegende Erfindung gerade das Gegenteil, und dadurch wird erreicht, daß in der erfindungsgemässen Vorrichtung die zu bearbeitenden Massen zwischen einem ersten Paar von einander gegenüberstehenden Ringscheibenabschnitten und den beiden in axialer Richtung benachbarten Paaren von einander gegenüberstehenden Ringscheibenabschnitten ganz überwiegend einer Scherbeanspruchung unterworfen wird, da die Stirnflächen der Ringscheibenabschnitte besser wirksam werden und wegen der gleichsinnigen Drehung der beiden Wellen im Bereich zwischen den Wellen der "Höcker" eine Ringscheibenabschnitts einer Welle die zu bearbeitenden Massen in einer Richtung durchläuft, die der den den Massen von den benachbarten Ringscheibenabschnitten der anderen Welle erteilten Bewegungsrichtung gerade entgegengerichtet ist. Ein weiterer, durch die Erfindung herbeigeführter Vorteil ist darin zu sehen, daß sich pro Längeneinheit der Vorrichtung die Zahl der Ringscheibenabschnitte und damit die Grösse der wirksamen Flächen beträchtlich erhöhen lässt und daß das den Bearbeitungsprozess unterzogene Massevolumen weit grössen als in den bekannten Vorrichtungen ist. Auch lässt sich die erfindungsgemässe Vorrichtung mit höherer Wellendrehzahl betreiben, da—in axialer Richtung gesehen—sich in dem Zwickel zwischen dem Kamm eines Ringscheibenabschnitts der einen Welle und dem gegenüberstehenden Ringscheibenabschnitt der anderen Welle kein hoher Druck aufbauen kann, denn die zu bearbeitenden Massen werden ja nicht, wie beim Stand der Technik, vor breiten Kämmen der Ringscheibenabschnitte hergeschoben. Mit Hilfe der erfindungsgemässen Vorrichtung lässt sich also in kürzerer Zeit und mit geringerem Energieaufwand schonender eine grössere Homogenität der zu bearbeitenden Massen herbeiführen als mit den bekannten Vorrichtungen.

Die grundsätzlichen Vorteile der erfindungsgemässen Lösung machen sich umso ausgeprägter bemerkbar, je schmäler bzw. dünner die durch die Massen hindurchlaufenden Ringscheibenabschnitte im Vergleich zu ihrem axialen Abstand sind, und die Verminderung der Diche der durch die Massen hindurchlaufenden Bereiche der Ringscheibenabschnitte findet erst dort ihre Grenze, wo diese Bereiche—bezogen auf die Viskosität der zu bearbeitenden Massennicht mehr die erforderliche Festigkeit aufweisen.

Um eine kontinuierliche Verfahrensführung zu erreichen, ist ein Fördereffekt in Wellenlängsrichtung erwünscht, wobei angestrebt wird, durch eine entsprechende Ausbildung der Vorrichtung zu erreichen, daß die zu bearbeitenden Massen im wesentlichen nur axial vorgeschoben, jedoch so wenig wie möglich im Umlauf versetzt werden, um die freien Oberflächen der Ringscheibenabschnitte möglichst wirksam werden zu lassen und eine maximale Scherbeanspruchung der zur bearbeitenden Massen berbeizuführen, denn eine solche Scherbeanspruchung ist bezüglich der angestrebten Homogenisierung der Massen weit wirksamer als die Erzeugung von Druckunterschieden. Bei einer diesbezüglich besonders vorteilhaften Ausführungsform der erfindungsgemässen Vorrichtung sind die von der zugehörigen Wellenachse den grössten Abstand aufweisenden Umfangsbereiche der Ringscheibenabschnitte schraubenlinienförmig gegeneinander versetzt und weisen voneinander einen axialen Abstand auf, welcher in der Grössenordnung der Ganghöhe der Schraubenlinie liegt. Auf die angestrebte Maximierung der wirksamen freien Oberflächen der Ringscheibenabschnitte wirkt es sich ferner günstig aus, wenn bei einer Vorrichtung, bei der zur Erzielung eines Fördereffekts in einer vorgegebenen Wellenlängsrichtung die von der zugehörigen Wellenachse den grössten Abstand aufweisenden Umfangsbereiche der Ringscheibenabschnitte ungefähr schraubenlinienförmig gegeneinander versetzt wind, aufeinanderfolgende Ringscheibenabschnitte einer Welle jeweils um einen Drehwinkel von ungefähr

$$\frac{360°}{2 \cdot Gangzahl}$$

gegeneinander versetzt sind und der Versatz zumindest jedes zweiten Ringscheibenabschnitts um einige wenige Grad von dem Wert

$$\frac{360°}{2 \cdot Gangzahl}$$

abweicht. Durch jene Abweichung lässt sich eine vorbestimmte axiale Förderrichtung erzielen.

Die Wellen der erfindungsgemässen Vorrichtung müssen nicht über ihre ganze Länge gleich ausgebildet sein; so können sie z.B. über einen Teil ihrer Länge die Gestalt einer normalen Schneckenwelle haben. Für ein wirksames Mischen, Dispergieren oder Homogenisieren von Massen mit Hilfe von im wesentlichen Scherkräften empfiehlt es sich jedoch, dem mit Ringscheibenabschnitten versehenen Bereich einer Welle eine Länge zu verleihen, die mindestens gleich der Hälfte des Durchmessers des diese Welle aufnehmenden Gehäusehohlraums ist.

Im folgenden soll die Erfindung anhand zweier besonders bevorzugter Ausführungsformen, die in der beiliegenden Zeichnung dargestellt sind, noch näher erläutert werden; in der Zeichnung zeigen:

Fig. 1 einen horizontalen Schnitt durch die erste Aufführungsform;

Fig. 2 einen Schnitt durch diese erste Ausführungsform nach der Linie 2—2 in Fig. 1;

Fig. 3 einen erfindungsgemäß ausgebildeten Bereich der zweiten Ausführungsform in einer Darstellung entsprechend der Darstellung in Fig. 1, und

Fig. 4 einen Schnitt durch diese zweite Ausführungsform nach der Linie 4—4 in Fig. 3.

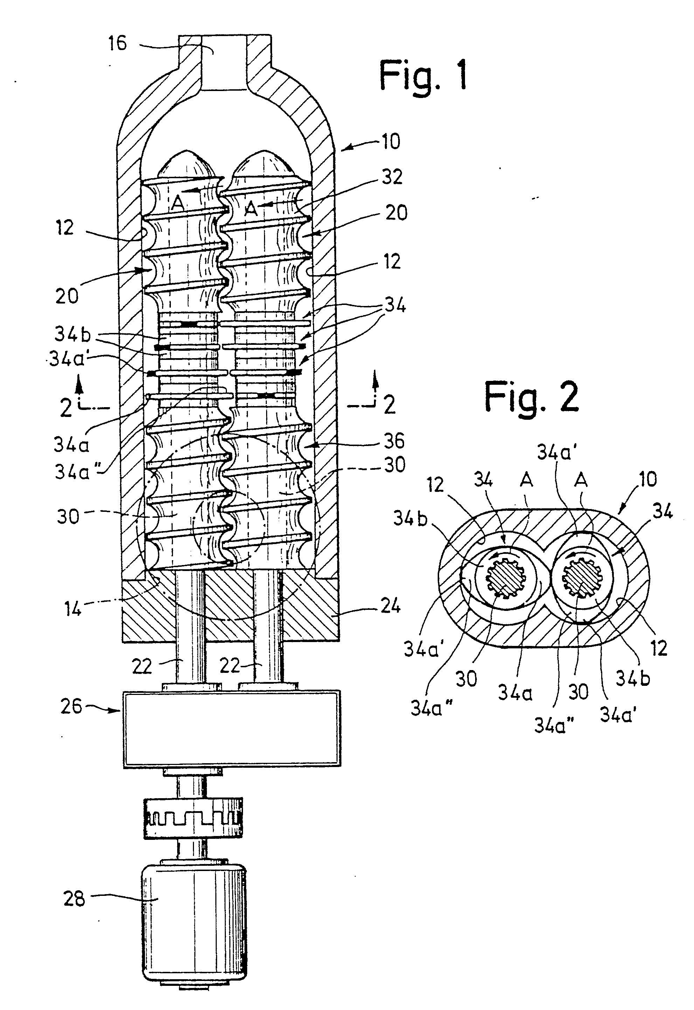

Die Fig. 1 und 2 zeigen ein Maschinengehäuse 10 mit zwei achsparallelen, einander teilweise durchdringenden zylindrischen Bohrungen 12, einer von oben her in diese Bohrungen mündenden Einfüllöffnung 14 und einer Auslaßöffnung 16. Jede der Bohrungen 12 nimmt eine erfindungsgemäße Bearbeitungswelle 20 auf, welche mit einem Lagerschaft 22 in einer Rückwand 24 des Maschinengehäuses 10 fliegend gelagert ist. Dem gleichsinnigen Antrieb der beiden Bearbeitungswellen 20 dienen ein Getriebe 26 sowie ein Motor 28.

Jede der Bearbeitungswellen 20 besitzt eine gezahnte Kernwelle 30, deren rückwärtiges Ende in den Lagerschaft 22 übergeht. Auf diese Kernwelle sind verschiedene büchsenartige Teile aufgeschoben, nämlich eine Schneckenwellenbüchse 32, mehrere erfindungsgemäß ausgebildete Materialbearbeitungsbüchsen 34 sowie eine weitere Schneckenwellenbüchse 36. Alle diese Büchsen besitzen in der Mitte eine Öffnung, deren Form der Kontur der Kernwelle 30 angepaßt ist, so daß die Büchsen mit der Kernwelle drehfest verbunden sind.

Bei der dargestellten, bevorzugten Ausführungsform besteht jede der Materialbearbeitungsbüchsen 34 aus einem mittleren Bearbeitungsringscheibenabschnitt 34a, der zwischen Distanzscheibenabschnitten 34b angeordnet und mit diesen einstückig ist. Erfindungsgemäß weisen die Distanzscheibenabschnitte 34b eine Außenkontur auf, die einem zur Wellenachse konzentrischen Kreis entspricht, dessen Radius geringfügig kleiner ist als der maximale Radius des gegenüberliegenden Bearbeitungsringscheibenabschnitts 34a der benachbarten Bearbeitungswelle 20. Ferner ist erfindungsgemäß die Dicke (Abmessung in axialer Richtung) zweier einander benachbarter Distanzscheibenabschnitte 34b um ein Vielfaches größer als die Dicke der benachbarten Bearbeitungsringscheibenabschnitte 34a.

Die Bearbeitungsringscheibenabschnitte 34a haben bei der dargestellten Aufführungsform zwei einander gegenüberliegende Erhebungen, Nocken oder Vorsprünge 34a', und erfindungsgemäß sind in axialer Richtung aufeinander folgende Bearbeitungsrichscheibenabschnitte 34a winkelmäßig so gegeneinander versetzt, daß sich bei einer Drehung der beiden Bearbeitungswellen 20 in Richtung der Pfeile A ein Fordereffekt in Richtung von der Einfüllöffnung 14 zur Auslaßöffnung 16 ergibt, und zwar nicht nur an den Schneckenwellenbüchsen 32 und 36, sondern auch im Bereich des Pakets von Materialbearbeitungsbüchsen 34. Die Erhebungen 34a' bilden dann nämlich Teilstücke einer förderwirksamen Schraubenlinie.

Es ist außerdem zweckmäßig, die Bearbeitungswellen 20 so anzuordnen, daß sie miteinander kämmen, das heißt, daß die einander benachbarten Schneckwellenbüchsen 32 und 36 ineinander greifen und sich die Erhebungen 34a' der Bearbeitungsringscheibenabschnitte 34a der beiden Bearbeitungswellen—in axialer Richtung gesehen—überlappen, wie dies die Fig. 1 deutlich erkennen läßt. Auf diese Weise läßt sich auch die vom Stand der Technik her bekannte mechanische Selbstreinigung der Bearbeitungswellen herbeiführen, jedenfalls solange der Füllgrad der Maschine im Bereich zwischen den beiden Bearbeitungswellen groß genug ist.

Da bei der erfindungsgemäßen Vorrichtung erhebliche Abstände zwischen den Bearbeitungsscheibenabschnitten 34a vorgesehen und diese verhältnismäßig schmal gehalten sind, treiben die sich drehenden Erhebungen der Bearbeitungsringscheibenabschnitte die zu bearbeitenden Massen nicht in dem Maße in Drehrichtung vor sich her, wie dies bei den bekannten Vorrichtungen der eingangs geschilderten Art der Fall ist. Vielmehr stehen die zu bearbeitenden Massensieht man einmal von der Förderung in axialer Richtung ab—nahezu still, so daß die Stirnflächen 34a'' der Bearbeitungsringscheibenabschnitte 34a voll zur Wirkung kommen.

Da ferner mit wachsender Dicke der Bearbeitungsringscheibenabschnitte einander benachbarter, gleichsinnig drehender Bearbeitungswellen der Stoffaustausch geringer wird, haben die erfindungsgemäß schmal ausgebildeten Bearbeitungsringscheibenabschnitte eine wesentliche Erhöhung des Stoffaustauschs zur Folge, was nicht nur dem Homogenisierungsvorgang förderlich ist, sondern auch zu einer starken Verminderung der mittleren Temperaturen der zu bearbeitenden Massen führt.

Hieraus ergibt sich, daß die Drehzahl der Bearbeitungswellen gegenüber den bakannten Vorrichtungen der eingangs geschilderten Art erheblich gesteigert werden kann, denn die mittlere Schzerbeanspruchung des zu bearbeitenden Materials kann so lange erhöht werden, bis die materialabhängige maximale mittlere Produkttemperatur erreicht ist.

Die gegenüber dem Stand der Technik erheblich vergrößerten Abstände der Bearbeitungsringscheibenabschnitte voneinander bringen ferner den Vorteil mit sich, daß der im Bereich der miteinander kämmenden Bearbeitungsringscheibenabschnitte normalerweise besonders hohe Verschleiß ganz wesentlich herabgesetzt wird, was sich vor allem beim Einmischen abrasiv wirkender Bestandteile wie Glasfasern etc. in Kunststoffe und dergleichen bemarkbar macht.

Selbstverständlich läßt sich das erfindungsgemäße Prinzip auch bei Maschinen mit mehr als zwei Bearbeitungswellen verwirklichen.

Die Diche der Bearbeitungsringscheibenabschnitte 34a sollte 10% des Durchmessers der zugehörigen Bohrungen 12 nicht überschreiten, und die Länge des erfindungsgemäß ausgebildeten Abschnitts einer Bearbeitungswelle sollte mindestens halb so groß wie der Durchmesser der zugehörigen Gehäusebohrung sein.

Selbstverständlich könnten die Bearbeitungsringscheibenabschnitte 34a als von den Distanzscheibenabschnitten 34b getrennte Teile ausgebildet und die einander benachbarten Distanzscheibenabschnitte 34b zu einem einzigen Teil zusammengefaßt sine.

Da die Bearbeitungsringscheibenabschnitte 34a der ersten, in den Fig. 1 und Fig. 2 dargestellten Ausführungsform zwei Erhebungen 34a' besitzen, wirken sie ähnlich wie eine zweigängige Schneckenwelle; besonders gute Ergebnisse bei vorbestimmter axialer Förderrichtung lassen sich erfindungsgemäß erzielen, wenn der Drehwinkelversatz zwischen in axialer Richtung aufeinanderfolgenden Bearbeitungsringscheibenabschnitten 34a bei einer "zweigängigen Schnecke" umgefähr 90° beträgt, bei einer "dreigängigen Schnecke" dementsprechend ungefähr 60° etc. und bei einer "eingängigen Schnecke" demzufolge ungefähr 180°, wobei aufeinanderfolgende oder jeder zweite der Bearbeitungsringscheibenabschnitte um einige wenige Grad mehr oder weniger stark versetzt sind bzw. ist, als dies der vorstehend angegebenen Gesetzmäßigkeit entspricht.

Nach einem weiteren, vorteilhaften Merkmal der Erfindung werden die einander benachbarten Bearbeitungsringscheibenabschnitte 34a zweier zusammenwirkender Bearbeitungswellen drehwinkelmäßig etwas mehr oder etwas geringer gegeneinander versetzt als auf ein und derselben Welle einander benachbarte Bearbeitungsringscheibenabschnitte.

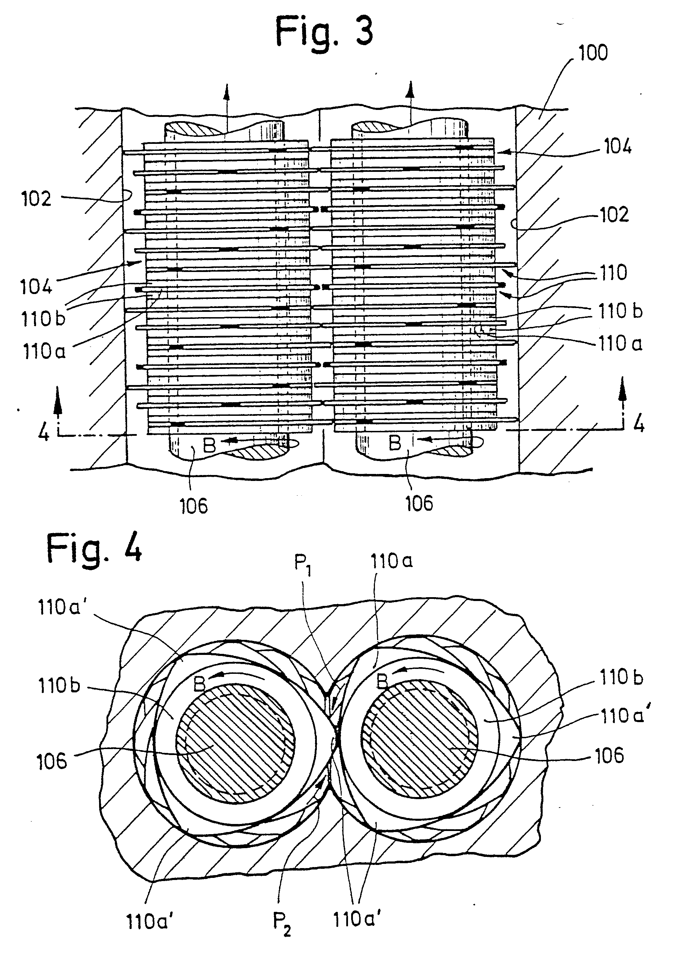

Die Fig. 3 und 4 zeigen Ausschnitte der zweiten Ausführungsform mit einem Maschinengehäuse 100, welches achsparallele, einander teilweise durchdringende, kreiszylindrischen Bohrungen 102 zur Aufnahme von Bearbeitungswellen 104 aufweist. Diese sollen in derselben Weise wie bei der ersten Ausführungsform gleichsinnig in Richtung der Pfeile B angetrieben werden.

Die Bearbeitungswellen besitzen mit einem Außengewinde versehene Kernwellen 106, auf die außer nicht dargestellten Schneckenwellenbüchsen Materialbearbeitungsbüchsen 110 aufgeschraubt sind, welche wiederum aus jeweils einem Bearbeitungsringscheibenabschnitt 110a und zu beiden Seiten des letzteren angeordneten Distanzscheibenabschnitten 110b bestehen. Wie besonders deutlich die Fig. 4 erkennen läßt, besitzen die Bearbeitungsringscheibenabschnitte 110 a bei dieser Ausführungsform jedoch drei Erhebungen 110a', wobei einander entsprechende Erhebungen von in axialer Richtung aufeinanderfolgenden Bearbeitungsringscheibenabschnitten winkelmäßig so gegeneinander versetzt angeordnet sind, daß die Bearbeitungsringscheibenabschnitte einer jeden Bearbeitungswelle quasi eine dreigängige Schnecke bilden.

Durch die Pfeile P1 und P2 in Fig. 4 wird verdeutlicht, wie die in Drehrichtung mitgenommenen Teile der zu bearbeitenden Massen und damit die so gebildeten Produktströme in denjenigen Bereichen, in denen Bearbeitungswellen ineinandergreifen, aufeinandertreffen und sich am Mitdrehen mit den Bearbeitungswellen gegenseitig hindern; im Gegensatz hierzu treffen die vergleichbaren Produktströme bei den bekannten Vorrichtungen der eingangs erwähnten Art nich so aufeinander, sondern sie werden nur umgelenkt.

Wie bereits erwähnt, können statt zu den Wellenachsen konzentrischen, kreisrunden Distanzscheiben auch exzentrische oder eben nicht kreisrunde Distanzscheiben zwischen den Bearbeitungsringscheibenabschnitten vorgesehen werden, wobei allerdings zu beachten ist, daß der größte Radius dieser Distanzscheiben geringfügig kleiner sein muß als der halbe Achsabstand der Bearbeitungswellen.

**Patentansprüche**

1. Vorrichtung zum Mischen, Dispergieren und Homogenisieren von Massen mit mindestens einer viskosen Komponente, welche in einem Gehäuse (10; 100) mindestens zwei zueinander parallele, gleichsinnig antreibbar, miteinander kämmende Wellen (20; 104) besitzt, für die das Gehäuse einander durchdringende, zueinander parallele, kreiszylindrische oder konische Gehäusehohlräume (12; 102) aufweist und die zur Bearbeitung der Massen im axialen Abstand voneinander angeordnete, einander gegenüberstehende Ringscheibenabschnitte (34a; 110a) mit von einem zur Wellenachse konzentrischen Kreis abweichender Kontur tragen wobei sich die von der zugehörigen Wellenachse den grössten Abstand aufweisenden Umfangsbereiche (34a'; 110') der Ringenscheibenabschnitte der beiden Wellen (20; 104), in axialer Richtung gesehen, überlappen, dadurch gekennzeichnet, daß die Dicke der Ringscheibenabschnitte (34a; 110a) kleiner ist als 10% des Durchmessers des zugeordneten Gehäusehohlraums (12; 102) an der betreffenden Stelle und daß der axiale Abstand der Ringscheibenabschnitte (34a; 110a) um ein Vielfaches grösser als ihre Dicke ist.

2. Vorrichtung nach Anspruch 1, dadurch gekennzeichnet, daß die von der zugehörigen Wellenachse den grössten Abstand aufweisenden Umfangsbereiche der Ringscheibenabschnitte schraubenlinienförmig gegeneinander versetzt sind und einen axialen Abstand voneinander aufweisen, welcher in der Grössenordnung der Ganghöhe der Schraubenlinie liegt.

3. Vorrichtung nach Anspruch 1, dadurch gekennzeichnet, daß zur Erzielung eines Fördereffekts in einer vorgegebenen Wellenlängsrichtung die von der zugehörigen Wellenachse den grössten Abstand aufweisenden Umfangsbereiche der Ringscheibenabschnitte ungefähr schraubenlinienförmig gegeneinander versetzt sind, wobei aufeinanderfolgende Ringscheibenabschnitte eine Welle jeweils um einen Drehwinkel von ungefähr

$$\frac{360°}{2 \cdot \text{Gangzahl}}$$

gegeneinander versetzt sind und der Versatz zumindest jedes zweiten Ringscheibenabschnitts um einige wenige Grad von dem Wert

$$\frac{360°}{2 \cdot \text{Gangzahl}}$$

abweicht.

4. Vorrichtung nach einem oder mehreren der Ansprüche 1 bis 3, dadurch gekennzeichnet, daß der mit Ringscheibenabschnitten versehene Bereich einer Welle eine Länge aufweist, die mindestens gleich der Hälfte des Durchmessers des diese Welle aufnehmenden Gehäusehohlraums ist.

**Revendications**

1. Dispositif pour mélanger, disperser et homogénéiser des masses ayant au moins un composant visqueux, qui comporte dans un boîtier (10; 100) au moins deux arbres (20; 104) mutuellement parallèles qui peuvent être entraînés dans le même sens et s'engagent l'un das l'autre, pour lesquels le boîtier présente des cavités (12; 102) cylindriques ou coniques, mutuellement parallèles et s'interpénétrant, et qui, pour le travail des masses, portent des sections à plaques annulaires (34a; 110a) qui sont disposées à une certaine distance axiale l'une de l'autre et sont situées l'une en face de l'autre et qui présentent un contour déviant d'une cercle concentrique à l'axe des arbres, les zones périphériques (34a'; 110a'). présentant la plus grande distance par rapport à l'axe d'arbre correspondant, des sections à plaques annulaires des deux arbres (20; 104) se recouvrant lorsqu'elles sont vues en direction axiale, caractérisé en ce que l'épaisseur des sections à plaques annulaires (34a; 110a) est inférieure à 10% du diamètre de la cavité ajointe (12; 102) à l'endroit concerné et en ce que la distance axiale entre les sections à plaques annulaires (34a; 110a) est d'une grandeur d'environ un multiple de son épaisseur.

2. Dispositif suivant la revendication 1, caractérisé en ce que les zones périphériques des sections à plaques annulaires qui présentent la plus grande distance par rapport à l'axe d'arbre correspondant sont mutuellement décalées selon une ligne hélicoïdale et en ce qu'elles présentent une distance axiale entre elles qui est de l'ordre de grandeur du pas de la ligne hélicoïdale.

3. Dispositif suivant la revendication 1, caractérisé en ce que, pour obtenir un effet d'avancement dans un sens prédéterminé le long des arbres, les zones périphériques des sections à plaques annulaires, qui présentent la plus grande distance par rapport à l'axe d'arbre correspondant, sont mutuellement décalées approximativement selon une ligne hélicoïdale, des sections à plaques annulaires successives d'un arbre étant chacune mutuellement décalées d'un angle de rotation d'environ

$$\frac{360°}{2 \cdot \text{nombre de spires}}$$

et en ce que le décalage d'au moins chaque deuxième section à plaques annulaires dévie d'un petit nombre de degrés de la valeur de

$$\frac{360°}{2 \cdot \text{nombre de spires}}.$$

4. Dispositif suivant l'une ou plusieurs des revendications 1 à 3, caractérisé en ce que la zone d'un arbre pourvue des sections à plaques annulaires présente une longueur qui est au moins égale à la moitié du diamètre de la cavité dans laquelle cet arbre est logé.

**Claims**

1. A device for mixing, dispersing and homogenizing compounds including at least one viscous component, said device comprising in a housing (10; 100) at least two parallel, intermeshing shafts (20; 104) adapted to be driven in the same direction, said housing including cylindrical or conical housing cavities (12; 102) for said shafts, said cavities being parallel to and penetrating one another, and said shafts bearing ring disc sections (34a; 110a) for the purpose of working said compounds, said ring disc sections being axially spaced from and located opposite one another and having a contour differing from that of a circle concentric to the shaft axis, those circumferential areas (34a'; 110a') of said ring disc sections of said two shafts (20; 104) having the greatest distance from the associated shaft axis overlapping one another when seen in axial direction, characterized in that the thickness of said ring disc sections (34a; 110a) is less than 10% of the diameter of the associated housing cavity (12; 102) at the relevant place and that the axial distance between said ring disc sections (34a; 110a) is many times greater than their thickness.

2. Device as defined in claim 1, characterized in that said circumferential areas of said ring disc sections having the greatest distance from the associated shaft axis are helically offset relative to one another and are axially spaced from one another by a distance in the order of magnitude of the pitch of the helix.

3. Device as claimed in claim 1, characterized in that to achieve a conveying effect in a predetermined longitudinal direction of said shafts, said circumferential areas of said ring disc sections having the greatest distance from the associated shaft axis are offset approximately helically from one another, successive ring disc sections of a shaft being offset from one another each time by an angle of rotation of approximately

$$\frac{360°}{2 \times \text{No. of threads}}$$

and the offset of at least every second ring disc section deviating by a few degrees from the value

$$\frac{360°}{2 \times \text{No. of threads}}.$$

4. Device as defined in any or several of claims 1 to 3, characterized in that the length of the region of a shaft provided with ring disc sections is at least equal to half the diameter of the housing cavity accommodating said shaft.

# Fig. 1

# Fig. 2

# Fig. 3

100

104

102

102

110

110 b

110 a

104

110 b

110 a

102

4

4

B

B

106

106

# Fig. 4

$P_1$

110 a

110 a'

110 b

110 a'

110 b

B

B

106

110 a'

106

110 a'

$P_2$

110 a'